# FASCICULE DE BREVET EUROPEEN

(11) **EP 1 174 637 B1**
(45) Date de publication et mention de la délivrance du brevet: **04.05.2005**
(21) Numéro de dépôt: 01401728.9
(22) Date de dépôt: 28.06.2001
(51) Int. Cl.: F16F 9/348

(54) **Dispositif d'amortissement à obturateur unique**
Dämpfungseinrichtung mit einem einzelnen Klappenventil
Damping device with a single flap valve

(30) Priorité: 18.07.2000 FR 0009415
(43) Date de publication de la demande: 23.01.2002
(73) Titulaire: Peugeot Citroen Automobiles SA, 92200 Neuilly sur Seine (FR)
(72) Inventeur: Mennesson, Dominique, 94700 Maisons-Alfort (FR)
(74) Mandataire: Bentz, Jean-Paul

(56) Documents cités:
- DE-A- 3 631 714
- DE-A- 19 857 068
- FR-A- 2 693 524
- FR-A- 2 751 041
- US-A- 3 747 714
- US-A- 3 837 445

## Description

La présente invention concerne de façon générale le domaine des filtres d'amortissement à laminage hydraulique, du type de ceux qui sont notamment utilisés dans les suspensions de véhicules automobiles.

Plus précisément, l'invention concerne un dispositif d'amortissement à laminage hydraulique pour amortir des oscillations de pression s'exerçant entre des premier et second volumes de fluide hydraulique, ce dispositif comprenant un séparateur centré sur un axe principal, séparant les deux volumes de fluide, et portant des moyens de clapet anti-retour tarés de premier et second types à flux mutuellement croisés, ces moyens de clapet comprenant une série de canaux traversant le séparateur et au moins un obturateur à lame flexible élastiquement sollicité vers un premier siège de clapet formé sur une première face axiale du séparateur, qui est tournée vers le premier volume de fluide hydraulique.

Les dispositifs de ce type sont bien connus dans l'art antérieur, notamment pour leur utilisation dans les suspensions de véhicules automobiles, et sont par exemple illustrés par les documents de brevets FR - 2 609 131, FR - 2 767 373, WO 92/16769, et GB 2 335 476.

On sait que la suspension d'un véhicule a pour rôle de filtrer et de réduire les chocs provoqués par le déplacement du véhicule sur les inégalités de la route, de permettre à chaque roue de rester toujours en contact avec le sol, et de conserver une assiette de caisse la plus constante possible.

Cette fonction est réalisée en interposant entre la caisse et les roues un élément élastique, généralement un ressort, dont il faut amortir le mouvement oscillatoire par un amortisseur, ce dernier devant simultanément freiner les oscillations de la caisse et celles des roues, afin d'éviter le rebondissement des roues sur le sol.

Une des technologies actuellement les plus répandues pour remplir cette fonction d'amortissement consiste, précisément, à dissiper l'énergie des oscillations par un laminage d'huile entre deux chambres.

Pour ce faire, l'huile est contrainte à ne pouvoir passer de l'une de ces chambres à l'autre qu'à travers des orifices calibrés, dont certains au moins sont obturés par des lamelles métalliques élastiques ou diaphragmes déformables qui ne peuvent être déplacés de leur position de repos que par une force minimale non nulle, et qui n'autorisent donc un écoulement d'huile d'une chambre à l'autre que s'ils sont effectivement déplacés de leur position de repos par une différence de pression suffisante entre les deux chambres.

Dans les dispositifs connus, les canaux se répartissent en deux séries de canaux, les canaux de la première série étant dédiés au flux de fluide du premier volume vers le second, et les canaux de la seconde série étant dédiés au flux de fluide en sens inverse.

Cette conception a cependant pour effet immédiat de réduire l'aire totale qu'occupent, dans le séparateur, les canaux de chaque série, en raison de l'aire qui doit être réservée aux canaux de l'autre série.

Or, toutes choses étant égales par ailleurs, la réduction de l'aire des canaux se traduit par une augmentation de la vitesse de chacun des flux de fluide à travers le séparateur, ainsi que par une augmentation des efforts indésirables que le dispositif d'amortissement transmet à la caisse du véhicule, dans la mesure où ces efforts sont proportionnels à la vitesse de déplacement du fluide hydraulique dans le séparateur.

De plus, les précédentes réalisations de dispositifs d'amortissement où l'ensemble des clapets est situé sur le même côté du piston séparateur nécessitent l'emploi d'organes d'indexation de type picôts, plats, ou broches, afin de garantir l'alignement angulaire autour de l'axe principal des différentes ouvertures pratiquées dans les disques fléchissants constitutifs des clapets.

Dans ce contexte, la présente invention a pour but de proposer un dispositif d'amortissement conçu pour échapper à l'une au moins de ces contraintes de construction et à ses effets néfastes.

A cette fin, le dispositif de l'invention, par ailleurs conforme à la définition générique qu'en donne le préambule ci-dessus, est essentiellement caractérisé en ce que l'obturateur est conformé en une couronne entourant l'axe principal et limitée par des bords externe et interne, en ce que le séparateur comprend un second siège de clapet radialement plus proche de l'axe principal que le premier siège, les premier et second sièges entourant tous deux l'axe principal, en ce que l'obturateur s'appuie élastiquement sur les premier et second sièges respectivement par ses bords externe et interne et suivant des première et seconde directions axiales d'appui respectives inverses l'une de l'autre, et en ce que les canaux débouchent entre les premier et second sièges.

Selon un mode de réalisation préféré de l'invention, le premier siège est formé sur une nervure périphérique de la première face axiale du séparateur.

Pour permettre au dispositif de l'invention d'adopter deux régimes de fonctionnement, à savoir d'une part un régime correspondant aux faibles oscillations de pression et corrélativement à de faibles vitesses de déplacement du fluide hydraulique, et d'autre part un régime correspondant aux vitesses plus élevées, et pour lequel l'énergie du fluide doit être dissipée par déplacement des obturateurs, la nervure présente par exemple une ou plusieurs interruptions dont chacune forme un passage faisant communiquer les premier et second volumes de fluide à travers les canaux, et dans lequel le fluide hydraulique est laminé pour les faibles oscillations de pression.

Le second siège est, quant à lui, avantageusement formé par la périphérie d'un disque d'appui porté par une broche qui traverse le séparateur suivant l'axe principal, et qui est maintenu à distance de la première face axiale du séparateur par une cale traversée par la broche, la cale présentant par exemple un bord externe coaxial au bord interne de l'obturateur et formant butée de centrage pour ce bord interne.

La broche peut elle-même être traversée par un perçage qui fait communiquer les premier et second volumes de fluide, de manière à ménager une fuite supplémentaire entre les deux volumes de fluide, permettant de mieux contrôler le régime des faibles oscillations de pression selon leur direction.

A cette fin, le perçage de la broche peut aussi abriter un clapet anti-retour taré, qui n'autorise un flux de fluide hydraulique que du second volume de fluide vers le premier.

Enfin, le dispositif de l'invention peut aussi comporter un disque de restriction appuyé sur une seconde face axiale du séparateur qui est tournée vers le second volume de fluide hydraulique, ce disque de restriction obturant certains au moins des canaux et de façon au moins partielle.

Dans tous les cas, l'obturateur présente de préférence une symétrie de révolution autour de l'axe principal, de sorte que le dispositif peut être assemblé sans indexage angulaire de ses constitutants et assure de façon reproductible un amortissement indépendant de la position angulaire de ses constituants.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en coupe longitudinale du dispositif de l'invention, c'est-à-dire une vue en coupe réalisée dans un plan qui contient l'axe principal; et
- La figure 2 est une vue en plan du séparateur utilisé dans le dispositif de l'invention, ce séparateur étant observé suivant l'incidence repérée par les flèches II-II de la figure 1, et représenté à échelle réduite.

L'invention concerne un dispositif d'amortissement à laminage hydraulique pour amortir des oscillations de pression s'exerçant entre des premier et deuxième volumes 1, 2 de fluide hydraulique, représentés respectivement au-dessus et au-dessous du séparateur 3, ce dernier étant interposé entre ces deux volumes.

Ce séparateur 3, qui prend par exemple la forme générale d'un disque centré sur un axe principal X, présente deux faces axiales 31 et 32 respectivement tournées vers les volumes 1 et 2, et est traversé par une série de canaux 30.

Ce séparateur 3 est équipé de moyens de clapet anti-retour tarés, qui permettent au fluide de circuler suivant des flux mutuellement croisés, et qui appartiennent à l'un ou à l'autre de deux types différents selon qu'ils autorisent l'établissement d'un flux F1 du premier volume de fluide 1 vers le second 2, ou l'établissement d'un flux F2 du second volume de fluide 2 vers le premier 1.

Outre les canaux 30 qui traversent le séparateur 3, ces moyens de clapet comprennent un obturateur 5 à lame flexible qui est élastiquement sollicité vers un premier siège de clapet 41, ce siège 41 étant formé sur la face axiale 31 du séparateur qui est tournée vers le premier volume 1 de fluide hydraulique.

Selon un premier aspect spécifique de l'invention, l'obturateur 5 est conformé en une couronne qui entoure l'axe principal X et qui s'étend radialement entre des bords externe et interne, 51 et 52.

Selon un second aspect spécifique de l'invention, le séparateur 3 comprend un second siège de clapet 62, circulaire et continu, qui est radialement plus proche de l'axe principal X que le premier siège 41, les sièges 41 et 62 étant conformés pour entourer tous deux l'axe principal X.

Et selon un troisième aspect spécifique de l'invention, l'obturateur 5 s'appuie élastiquement sur les sièges 41 et 62 par ses bords externe et interne respectifs, 51 et 52 et suivant des directions axiales d'appui respectives D1 et D2 inverses l'une de l'autre, les canaux 30 traversant par ailleurs le séparateur 3 de manière à déboucher entre les sièges 41 et 62.

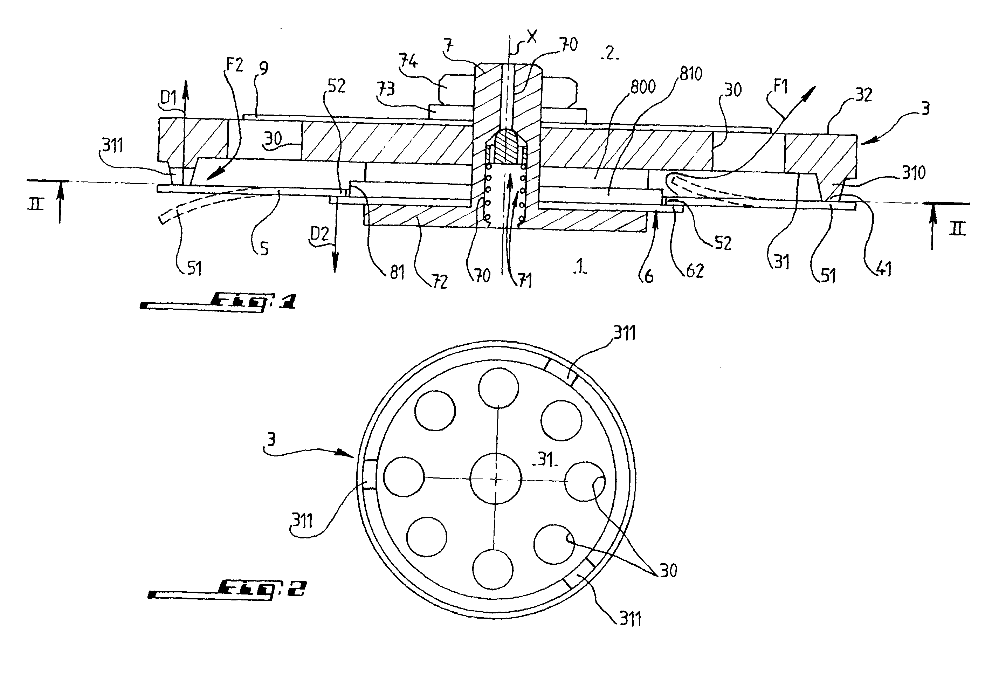

Comme le montre la figure 1, le premier siège 41 peut avantageusement être formé sur une nervure périphérique 310 de la face axiale 31 du séparateur 3, c'est-à-dire la face inférieure sur la figure.

La nervure 310 présente une ou plusieurs interruptions telles que 311, dont chacune forme un passage qui fait communiquer les volumes de fluide 1 et 2 à travers les canaux 30.

Le siège interne 62 est par exemple formé par la périphérie d'un disque d'appui 6 qui est maintenu à distance de la première face axiale 31 du séparateur par une cale 8.

Le disque d'appui est avantageusement porté par une broche 7 qui traverse le séparateur 3 et la cale 8 suivant l'axe principal X, cette broche 7 enserrant le disque 6, les cales 800 et 810, le séparateur 3, et un disque de restriction 9 au moyen d'une tête 72 solidaire de la broche 7, d'une rondelle 73 enfilée sur celle-ci, et d'un écrou 74 vissé sur une partie filetée de cette broche 7.

Comme le montre la figure 1, la cale 810 présente un bord externe 81 qui est coaxial au bord interne 52 de l'obturateur 5 et qui forme butée de centrage pour ce bord interne 52.

Le réglage de l'épaisseur totale des cales 800 et 810 permet de donner à l'obturateur 5, qui est par exemple constitué par un matériau élastique tel que l'acier, une précontrainte choisie à volonté dans une plage très large et qui détermine la force d'appui de cet obturateur sur la nervure 310.

La différence de diamètre entre le disque de centrage 810 et la cale 800 permet d'ajuster la section de passage hydraulique entre l'obturateur 5 et ces cales 800 et 810, en fonction de la déformation de l'obturateur 5.

La broche 7 est traversée par un perçage 70 qui fait communiquer l'un avec l'autre les volumes de fluide 1 et 2, et dans lequel est logé un clapet anti-retour taré 71 qui n'autorise un flux de fluide hydraulique que du volume de fluide supérieur 2 vers le volume de fluide inférieur 1.

Le disque de restriction 9 est appuyé sur la face axiale 32 du séparateur 3 et permet, lorsque c'est nécessaire, de réduire l'aire utile des canaux 30 en obturant certains au moins d'entre eux, et de façon au moins partielle.

Le fonctionnement de ce dispositif est le suivant.

Lorsque les oscillations de pression entre les volumes de fluide 1 et 2 ne présentent que de très faibles variations, le fluide hydraulique passe d'un volume à l'autre en traversant les passages constitués par les interruptions 311 de la nervure périphérique 310, et en dépensant corrélativement une quantité d'énergie relativement faible.

Le dispositif de l'invention offre alors pratiquement la même résistance au flux de fluide hydraulique circulant du volume inférieur 1 vers le volume supérieur 2, et au flux de sens inverse.

Lorsque les oscillations de pression entre les volumes de fluide 1 et 2 présentent des variations un peu plus importantes, le fluide circulant du volume inférieur 1 vers le volume supérieur 2 ne peut toujours traverser le séparateur 3 qu'en passant par les interruptions 311 de la nervure périphérique 310, tandis que le fluide circulant du volume supérieur 2 vers le volume inférieur 1 peut traverser le séparateur 3 non seulement en passant par les interruptions 311, mais également en forçant le clapet anti-retour 71 à s'ouvrir.

Le dispositif de l'invention offre alors une plus grande résistance au flux de fluide hydraulique circulant du volume inférieur 1 vers le volume supérieur 2, qu'au flux de sens inverse.

Lorsque les oscillations de pression entre les volumes de fluide 1 et 2 mettent en jeu une quantité d'énergie encore plus élevée, les pertes de charge subies par le fluide qui traverse les interruptions 311 de la nervure périphérique 310 et / ou le clapet anti-retour 71 sont telles que le débit de fluide qui traverse le séparateur 3 en empruntant ces voies devient insuffisant.

Dans ces conditions, le fluide passant du volume supérieur 2 vers le volume inférieur 1 déplace de son siège 41 le bord externe 51 de l'obturateur 5, comme le montrent les pointillés sur la gauche de la figure 1, et le fluide passant du volume inférieur 1 vers le volume supérieur 2 déplace de son siège 62 le bord externe 52 de l'obturateur 5, comme le montrent les pointillés sur la droite de la figure 1.

Par ailleurs, plus la quantité d'énergie mise en jeu par les oscillations de pression est élevée et plus les déformations de l'obturateur 5 sont importantes, de sorte que l'énergie dépensée par le fluide pour traverser le dispositif de l'invention croît avec l'énergie des oscillations à amortir.

Le dispositif de l'invention présente de nombreux avantages.

Tout d'abord, dans la mesure où les flux F1 et F2 empruntent les mêmes canaux 30, l'aire totale de ces derniers peut représenter une fraction élevée de l'aire de la face axiale du séparateur 3.

D'autre part, et pour la même raison, le risque de coincement d'une particule est fortement réduit, de sorte que le dispositif de l'invention présente une moindre sensibilité à la pollution et offre donc une meilleure constance de l'amortissement.

La présence du clapet anti-retour central 71 permet d'ajuster l'amortissement à des valeurs différentes pour les flux F1 et F2, y compris pour les basses vitesses d'oscillation.

L'utilisation d'un siège annulaire 310, et de préférence circulaire, et d'un empilage de cales de précontrainte 800 et 810 permet d'obtenir de fortes précontraintes de l'obturateur 5, et donc des valeurs élevées du taux d'amortissement en fonction de la vitesse, ce qui confère une amélioration notable du compromis confort / comportement du véhicule équipé du dispositif d'amortissement de l'invention.

Le dispositif de l'invention permet de faire varier l'une par rapport à l'autre les lois d'amortissement respectives des flux F1 et F2, par exemple par le choix du rapport du diamètre du bord externe 81 de la cale 810 au diamètre de la nervure 310 ou par une évolution radiale de l'épaisseur de l'obturateur 5.

Enfin, le dispositif de l'invention, grâce au faible nombre de pièces qui le composent, peut être fabriqué avec une excellente reproductibilité, et notamment avec une très faible dispersion des lois d'amortissement qui le caractérisent.

## Revendications

1. Dispositif d'amortissement à laminage hydraulique pour amortir des oscillations de pression s'exerçant entre des premier et second volumes (1, 2) de fluide hydraulique, ce dispositif comprenant un séparateur (3) centré sur un axe principal (X), séparant les deux volumes de fluide (1, 2), et portant des moyens de clapet anti-retour tarés (30, 41, 51; 30, 62, 52) de premier et second types à flux (F1, F2) mutuellement croisés, ces moyens de clapet comprenant une série de canaux (30) traversant le séparateur (3) et au moins un obturateur (5) à lame flexible élastiquement sollicité vers un premier siège de clapet (41) formé sur une première face axiale (31) du séparateur, qui est tournée vers le premier volume (1) de fluide hydraulique, **caractérisé en ce que** l'obturateur (5) est conformé en une couronne entourant l'axe principal (X) et limitée par des bords externe et interne (51, 52), **en ce que** le séparateur (3) comprend un second siège de clapet (62) radialement plus proche de l'axe principal (X) que le premier siège (41), les premier et second sièges (41, 62) entourant tous deux l'axe principal (X), **en ce que** l'obturateur (5) s'appuie élastiquement sur les premier et second sièges (41, 62) respectivement par ses bords externe et interne (51, 52) et suivant des première et seconde directions axiales d'appui respectives (D1, D2) inverses l'une de l'autre, **en ce que** les canaux (30) débouchent entre les premier et second sièges (41, 62), **en ce que** le second siège (62) est formé par la périphérie d'un disque d'appui (6) porté par une broche (7) qui traverse le séparateur (3) suivant l'axe principal (X) et **en ce que** la broche (7) est traversée par un perçage (70) qui fait communiquer les premier et second volumes de fluide (1, 2).

2. Dispositif d'amortissement suivant la revendication 1, **caractérisé en ce que** le premier siège (41) est formé sur une nervure périphérique (310) de la première face axiale (31) du séparateur (3).

3. Dispositif d'amortissement suivant la revendication 2, **caractérisé en ce que** la nervure (310) présente au moins une interruption (311) qui forme un passage faisant communiquer les premier et second volumes de fluide (1, 2) à travers les canaux (30).

4. Dispositif d'amortissement suivant l'une quelconque des revendications précédentes, **caractérisé en ce que** le disque d'appui (6) est maintenu à distance de la première face axiale (31) du séparateur par un empilage de cales (800 et 810) traversées par la broche (7).

5. Dispositif d'amortissement suivant la revendication 4, **caractérisé en ce que** la cale (810) présente un bord externe (81) coaxial au bord interne (52) de l'obturateur (5) et formant butée de centrage pour ce bord interne (52).

6. Dispositif d'amortissement suivant l'une quelconque des revendications précédentes, **caractérisé en ce qu'**il comprend un clapet anti-retour taré (71), logé dans le perçage (70) de la broche (7) et n'autorisant un flux de fluide hydraulique que du second volume de fluide (2) vers le premier (1).

7. Dispositif d'amortissement suivant l'une quelconque des revendications précédentes, **caractérisé en ce qu'**il comporte un disque de restriction (9), appuyé sur une seconde face axiale (32) du séparateur qui est tournée vers le second volume (2) de fluide hydraulique, le disque de restriction (9) obturant certains au moins des canaux (30) et de façon au moins partielle.

8. Dispositif d'amortissement suivant l'une quelconque des revendications précédentes, **caractérisé en ce que** l'obturateur (5) présente une symétrie de révolution autour de l'axe principal (X), de sorte que le dispositif peut être assemblé sans indexage angulaire de ses constituants et assure de façon reproductible un amortissement indépendant de la position angulaire de ses constituants.

## Patentansprüche

1. Hydraulische Dämpfungsvorrichtung mit Drosselung zum Dämpfen von Druckschwankungen, die zwischen einem ersten und einem zweiten Hydraulikflüssigkeitsvolumen (1, 2) ausgeübt werden, wobei diese Vorrichtung eine Trenneinrichtung (3) enthält, die auf eine Hauptachse (X) zentriert ist, die beiden Flüssigkeitsvolumen (1. 2) voneinander trennt und kalibrierte Rückschlagventilmittel (30, 41, 51; 30, 62, 52) erster und zweiter Art mit sich gegenseitig kreuzenden Strömungen (F1, F2) enthält, wobei diese Ventilmittel eine Reihe von Kanälen aufweisen, welche die Trenneinrichtung (3) durchsetzen, sowie zumindest einen flexiblen Klappenverschluss (5) der elastisch zu einem ersten Ventilsitz (41) beaufschlagt wird, der an einer ersten axialen Seite (31) der Trenneinrichtung gebildet ist, welche dem ersten Hydraulikflüssigkeitsvolumen (1) zugewandt ist, **dadurch gekennzeichnet, dass** der Verschluss (5) zu einem Ring ausgebildet ist, der die Hauptachse (X) umgibt und durch einen Außen- und einen Innenrand (51, 52) begrenzt ist, dass die Trenneinrichtung (3) einen zweiten Ventilsitz (62) enthält, der radial näher an der Hauptachse (X) als der erste Sitz (41) liegt, wobei der erste und der zweite Sitz (41, 62) beide die Hauptachse (X) umgeben, dass der Verschluss (5) sich elastisch an dem ersten und dem zweiten Sitz (41, 62) mit seinem äußeren bzw. inneren Rand (51, 52) in einer ersten bzw. zweiten axialen Abstützrichtung (D1, D2) abstützt, die einander entgegengesetzt sind, dass die Kanäle (30) zwischen dem ersten und dem zweiten Sitz (41, 62) ausmünden, dass der zweite Sitz (62) von dem Umfang einer Abstützscheibe (6) gebildet wird, die von einer Spindel (7) getragen wird, welche die Trenneinrichtung (3) entlang der Hauptachse (X) durchsetzt, und dass die Spindel (7) von einer Bohrung (70) durchsetzt ist, die das erste und das zweite Flüssigkeitsvolumen (1, 2) in Verbindung setzt.

2. Dämpfungsvorrichtung nach Anspruch 1, **dadurch gekennzeichnet, dass** der erste Sitz (41) an einer Umfangsrippe (310) der ersten axialen Seite (31) der Trenneinrichtung (3) gebildet ist.

3. Dämpfungsvorrichtung nach Anspruch 2, **dadurch gekennzeichnet, dass** die Rippe (310) zumindest eine Unterbrechung (311) aufwelst, die einen Durchgang bildet, welcher das erste und das zweite Flüssigkeitsvolumen (1, 2) durch die Kanäle (30) in Verbindung setzt.

4. Dämpfungsvorrichtung nach einem der vorangehenden Ansprüche, **dadurch gekennzeichnet, dass** die Abstützscheibe (6) über eine Stapelung von Passkeilen (800 und 810), die von der Spindel (7) durchsetzt werden, in Abstand von der ersten axialen Seite (31) der Trenneinrichtung gehalten wird.

5. Dämpfungsvorrichtung nach Anspruch 4, **dadurch gekennzeichnet, dass** der Passkeil (810) einen Außenrand (81) aufweist, der koaxial zum Innenrand (52) des Verschlusses (5) verläuft und einen Zentrieranschlag für diesen Innenrand (52) bildet.

6. Dämpfungsvorrichtung nach einem der vorangehenden Ansprüche, **dadurch gekennzeichnet, dass** sie ein kalibriertes Rückschlagventil (71) enthält, das in der Bohrung (70) der Spindel (7) aufgenommen ist und einen Durchfluss von Hydraulikflüssigkeit nur vom zweiten Flüssigkeitsvolumen (2) zum ersten (1) gestattet.

7. Dämpfungsvorrichtung nach einem der vorangehenden Ansprüche, **dadurch gekennzeichnet, dass** sie eine Begrenzungsscheibe (9) enthält, die an einer zweiten axialen Seite (32) der Trenneinrichtung abgestützt ist, die dem zweiten Hydraulikflüssigkeitsvolumen (2) zugewandt ist, wobei die Begrenzungsscheibe (9) zumindest bestimmte der Kanäle (30) zumindest teilweise verschließt.

8. Dämpfungsvorrichtung nach einem der vorangehenden Ansprüche, **dadurch gekennzeichnet, dass** der Verschluss (5) eine Rotationssymmetrie um die Hauptachse (X) aufweist, so dass die Vorrichtung ohne Winkelindexierung ihrer Bestandteile zusammengefügt werden kann und in reproduzierbarer Weise eine von der Winkelstellung ihrer Bestandteile unabhängige Dämpfung gewährleistet.

## Claims

1. Hydraulic laminating damping device for damping the pressure variations arising between first and second volumes (1, 2) of hydraulic fluid, this device comprising a separator (3) centred on a main axis (X) and separating the two volumes of fluid (1, 2) and carrying counterbalanced, non-return flap means (30,41, 51; 30, 62, 52) of first and second mutually crossed flux types (F1, F2), these flap means comprising a series of channels (30) crossing the separator (3) and at least one obstructor (5) with an elastically flexible blade, stressed towards a first flap seat (41) formed on a first axial face (31) of the separator, which is turned towards the first volume (1) of hydraulic fluid, **characterized in that** the obstructor (5) is formed as a collar surrounding the main axis (X) and bordered by outer and inner rims (51, 52), and **in that** the separator (3) has a second flap seat (62) that is radially closer to the main axis (X) than the first seat (41), the first and second seats (41, 62) both surrounding the main axis (X), and **in that** the obstructor (5) is elastically supported by the outer and inner rims in accordance with respective first and second axial directions of support (D1, D2) acting in opposite directions to each other, and **in that** the channels (30) open between the first and second seats (41, 62), and **in that** the second seat (62) is formed by the periphery of a support disk (6) born by a spindle (7) that crosses the separator (3) in the direction of the main axis (X) and **in that** the spindle (7) is crossed by a boring (70) connecting the first and second volumes of fluid (1, 2).

2. Damping device in accordance with clam 1, **characterized in that** the first seat (41) is formed on a peripheral rib (310) of the first axial face (31) of the separator (3).

3. Damping device in accordance with claim 2, **characterized in that** the rib (310) has at least one discontinuation (311) forming a passage connecting the first and second volumes of fluid (1, 2) via the channels (30).

4. Damping device in accordance with any one of the preceding claims, **characterized in that** the support disk (6) is held, by a stacking of shims (800 and 810) crossed by a spindle (7), at a separation from the first axial plate (31) of the separator.

5. Damping device in accordance with claim 4, **characterized in that** the shim (810) has an outer rim (81) that is coaxial with the inner rim (52) of the obstructor (5) and that forms a centring abutment for this inner rim (52).

6. Damping device in accordance with any one of the preceding claims, **characterized in that** it comprises a counterbalanced, non-return flap (71), housed in the boring (70) of the spindle (7) and only enabling flow of hydraulic fluid from the second volume of fluid (2) to the first (1).

7. Damping device in accordance with any one of the above claims, **characterized in that** it comprises a restriction disk (9) supported on a second axial face (32) of the separator which is turned towards the second volume (2) of hydraulic fluid, the restriction disk (9) at least partially closing at least some of the channels (30).

8. Damping device in accordance with any one of the preceding claims, **characterized in that** the obstructor (5) is rotationally symmetrical about the main axis (X), such that the device can be assembled without angular indexing of its component parts and thereby reproducibly ensures damping that is independent of the angular position of its component parts.
